(19) Europäisches Patentamt
European Patent Office
Office européen des brevets

(11) Publication number: 0 588 489 A1

(12) # EUROPEAN PATENT APPLICATION

(21) Application number: 93306361.2

(22) Date of filing: 11.08.93

(51) Int. Cl.[5]: C09B 29/033, C09B 29/08, D06P 3/60, D06P 3/26, D06P 3/54, D06P 3/82

(30) Priority: 14.09.92 GB 9219418

(43) Date of publication of application: 23.03.94 Bulletin 94/12

(84) Designated Contracting States: CH DE FR GB LI

(71) Applicant: ZENECA LIMITED
Imperial Chemical House, 9 Millbank
London SW1P 3JF (GB)

(72) Inventor: James, Mark Robert
16 Downham Avenue, Constable Lee Park
Rawtenstall BB4 8JY (GB)
Inventor: Meyrick, Barry Huston
23 Central Drive, Urmston
Manchester M31 1AQ (GB)
Inventor: Wight, Paul
125 Hilton Lane, Prestwich
Manchester M25 8SF (GB)

(74) Representative: Pugsley, Roger Graham et al
ICI Group Patents Services Dept. PO Box 6
Shire Park Bessemer Road
Welwyn Garden City Herts, AL7 1HD (GB)

(54) **Disperse dyes, free from sulphonic or carboxylic acid groups.**

(57) Disperse monoazo dyes, free from sulphonic or carboxylic acid groups, which are of the formula :

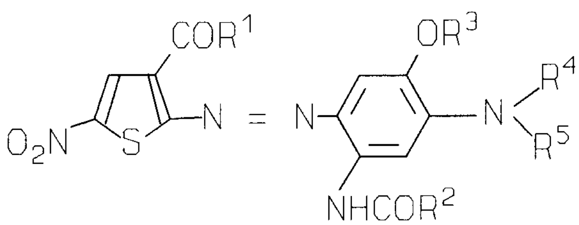

(1)

wherein
$R^1$, $R^2$ and $R^3$ each independently is lower alkyl ;
$R^4$ is hydrogen or optionally substituted lower alkyl ; and
$R^5$ represents optionally substituted lower alkyl.
The dyes have excellent dyeing characteristics and produce bluish-green shades of high fastness on synthetic textile materials.

EP 0 588 489 A1

This invention relates to disperse dyes and more particularly to disperse dyes of the monoazo series and to methods for their manufacture and use.

United Kingdom Patent No 1394365 describes disperse monoazo dyes, free from sulphonic and carboxylic acid groups, which are of the formula:

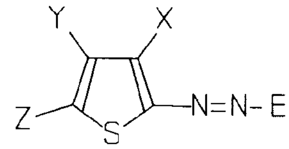

wherein X is cyano, chlorine, bromine, lower alkylcarbonyl, optionally substituted arylcarbonyl, lower alkylsulphonyl, optionally substituted carbo lower alkoxy, or optionally substituted carbonamido; Y is hydrogen, lower alkyl, optionally substituted aryl or optionally substituted carbo lower alkoxy; Z is hydrogen, lower alkyl, optionally substituted aryl, nitro, cyano, chlorine, bromine, optionally substituted carbo lower alkoxy, or optionally substituted carbonamido; provided that not more than one of X and Z is carbonamido and that Y and Z are not both hydrogen; and E is the residue of a coupling component of the acylacetarylamide, pyrazolone, aminopyrazole, phenol, 2,6-dihydroxypyridine or arylamine series, for example a radical of the formula:

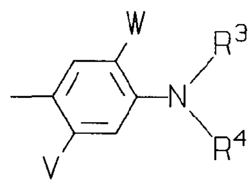

wherein W is hydrogen, lower alkyl or lower alkoxy, V is hydrogen, lower alkyl, lower alkoxy, chlorine, bromine or acylamino, in particular an acylamino group of the formula $-NHCOT^2$ or $-NHSO_2T^3$ wherein $T^2$ is hydrogen or lower alkyl, $T^3$ is lower alkyl, $R^3$ is hydrogen or an optionally substituted lower alkyl radical and $R^4$ is an optionally substituted lower alkyl radical.

It has now been found that certain dyes falling within the general class disclosed in United Kingdom Patent No 1394365 but not specifically described therein possess excellent dyeing characteristics and provide useful bluish-green shades of high fastness on synthetic textile materials.

Thus, according to the invention, there are provided disperse monoazo dyes, free from sulphonic or carboxylic acid groups, which are of the formula:

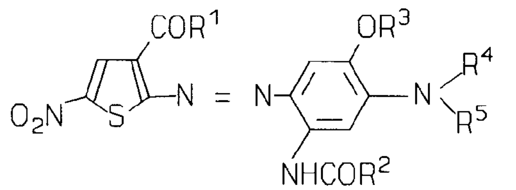

(1)

wherein:

$R^1$, $R^2$ and $R^3$ each independently is lower alkyl;

$R^4$ is hydrogen or optionally substituted lower alkyl; and

$R^5$ represents optionally substituted lower alkyl.

The terms "lower alkyl" and "lower alkoxy" used herein are to be understood as denoting alkyl and alkoxy radicals respectively containing from 1 to 4 carbon atoms.

Lower alkyl radicals represented by $R^1$, $R^2$ and $R^3$, which may be the same or different, are preferably methyl radicals.

As examples of the optionally substituted lower alkyl radicals represented by $R^4$ and $R^5$ in Formula 1, there may be mentioned hydroxy lower alkyl such as 2-hydroxyethyl, 2- or 3-hydroxypropyl and 4-hydroxybutyl, lower alkoxy lower alkyl such as 2-(methoxy or ethoxy)ethyl and 3-methoxypropyl, cyano lower alkyl such as 2-cyanoethyl, aryl lower alkyl such as benzyl and 2-phenylethyl, acyl lower alkyl such as 2-acetoxyethyl and 4-acetoxybutyl, lower alkoxy carbonyl lower alkyl such as 2-methoxycarbonylethyl, hydroxy lower alkoxy lower alkyl such as 2-(2-hydroxyethoxy)ethyl, lower alkoxy lower alkoxy lower alkyl such as 2-(2'-methoxyethoxy)ethyl, lower

alkoxy lower alkoxy carbonyl lower alkyl such as 2-(2'-methoxyethoxycarbonyl) ethyl, chloro lower alkyl such as 3-chloropropyl, and lower alkoxycarbonyloxy lower alkyl such as 2-ethoxycarbonyloxyethyl.

The dyes of Formula 1 may be prepared by diazotising a 2-aminothiophene of the formula:

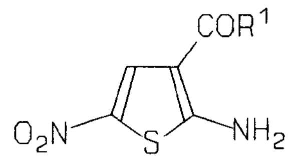

(2)

wherein $R^1$ is as defined above, and coupling the resulting diazo compound with an aromatic amine of the formula:

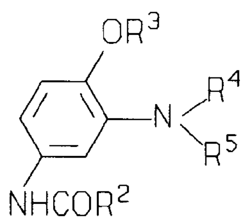

(3)

wherein $R^2$, $R^3$, $R^4$ and $R^5$ are as defined above.

The diazotisation and coupling may be carried out by appropriate methods conventionally used for these reactants and the dyes so formed may be isolated using known techniques.

In order to achieve maximum brightness, it can be advantageous to subject the dyes to conventional purification procedures, for example recrystallisation from organic solvents, chromatographic separations or washing with aqueous organic solvents. Suitable solvents for this purpose include dimethylformamide, alcohols, for example methanol, ethanol, propanol, isopropanol, ethylene glycol, diethylene glycol and the mono-lower alkyl ethers of these glycols, for example the methyl, ethyl and n-butyl ethers.

The 2-aminothiophenes of Formula 2 are known compounds and may be prepared by methods described in the prior art for the production of thiophene derivatives. The aromatic amines of Formula 3 are also known compounds.

The disperse monoazo dyes of the invention are valuable for colouring synthetic textile materials, especially secondary cellulose acetate, cellulose triacetate, polyamide such as polyhexamethylene adipamide and, above all, aromatic polyester such as polyethylene terephthalate textile materials. Such materials can be in the form of filaments, loose fibres, yarn or woven or knitted fabrics. The dyes are also useful for colouring fibre blends containing one or more synthetic fibrous material together with other types of fibre, for example polyester-cotton blends.

The dyes, optionally in conjunction with other disperse dyes, may be applied to the synthetic textile materials by methods which are conventionally employed in applying disperse dyes to such materials. Thus, the dyes in the form of aqueous dispersions can be applied by dyeing, padding or printing processes using the conditions and additives conventionally used in carrying out such processes.

When applied to synthetic textile materials by conventional methods, the dyes of the invention are characterised by excellent application performance, for example dyeing properties, and also by their high overall fastness properties, especially fastness to light and wet treatments.

The dyes may also be applied to textile materials by known methods of transfer colour printing such as sublimation transfer printing and wet transfer printing. They can also be used for the melt coloration of synthetic polymers and as pigments for the coloration of inks and paints.

The invention is illustrated but not limited by the following Examples.

Example 1

2-amino-3-acetyl-5-nitrothiophene (3.72g) was added slowly to a stirred mixture of acetic acid/propionic acid (86:14) (45ml) and 2M nitrosylsulphuric acid (12ml) at 0°C. The mixture was stirred at 0-5°C for 3 hours until diazotisation was complete.

3-N,N-di(2-methoxycarbonylethyl)amino-4-methoxyacetanilide (86% strength; 6.1g) was stirred in methanol (75ml), ice/water (100ml) and 1M sulphamic acid solution (10ml) at 0-5°C. Half of the diazo solution (35ml) prepared as described above was added slowly, keeping the temperature below 5°C and the pH was adjusted to 4 by addition of sodium acetate. After stirring at 0-5°C for 2 hours, the mixture was filtered and the crude product washed with water and dried.

The crude dye was stirred in dimethylformamide (100ml) and heated to 60°C. The mixture was stirred at this temperature for 30 minutes then cooled. Water was added slowly to precipitate the dye which was filtered off and dried.

The product was a dye of Formula 1 wherein $R^1=R^2=R^3=-CH_3$ and $R^4=R^5=-C_2H_4COOCH_3$ having λmax ($CH_2Cl_2$) 646nm ∊max 51,217.

When applied to polyester textile materials by a conventional disperse dyeing method, the dye so obtained gave bluishgreen shades having excellent fastness properties.

Examples 2-7

Further dyes of Formula 1 were prepared by the general method described in Example 1. The dyes are identified in the following Table by their substituents $R^1$-$R^5$. The dyes give bluishgreen shades on polyester textile materials:

| Example | $R^1$ | $R^2$ | $R^3$ | $R^4$ | $R^5$ | λmax (nm) |
|---|---|---|---|---|---|---|
| 2 | $CH_3$ | $CH_3$ | $CH_3$ | $C_2H_5$ | $C_2H_5$ | 659 (E59000) (in toluene) |
| 3 | $CH_3$ | $C_2H_5$ | $CH_3$ | $C_2H_5$ | $C_2H_5$ | 660 (in toluene) |
| 4 | $CH_3$ | $CH_3$ | $CH_3$ | $C_2H_4CO_2CH_3$ | $C_2H_4CO_2CH_3$ | 646 (E51217) (in $CH_2Cl_2$) |
| 5 | $CH_3$ | $CH_3$ | $C_2H_5$ | H | $C_2H_4CO_2CH_3$ | 640 (E59890) (in $CH_2Cl_2$) |
| 6 | $CH_3$ | $CH_3$ | $CH_3$ | H | $C_2H_4CO_2C_2H_4OCH_3$ | 640 (in $CH_2Cl_2$) |
| 7 | $CH_3$ | $CH_3$ | $CH_3$ | $C_2H_4OCOCH_3$ | $C_2H_4OCOCH_3$ | 640 (E43046) (in $CHCl_3$) |

## Claims

1. Disperse monoazo dyes, free from sulphonic or carboxylic acid groups, which are of the formula:

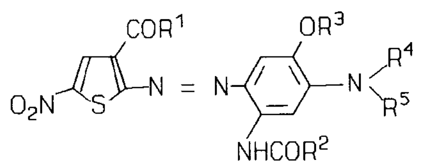

(1)

wherein
$R^1$, $R^2$ and $R^3$ each independently is lower alkyl;
$R^4$ is hydrogen or optionally substituted lower alkyl; and
$R^5$ represents optionally substituted lower alkyl.

2. A disperse monoazo dye according to Claim 1 wherein $R^5$ is selected from $C_{1-4}$-alkyl and $C_{1-4}$-alkyl substituted by a group selected from -OH, $C_{1-4}$-alkoxy, -CN, phenyl, acetoxy, $C_{1-4}$-alkoxycarbonyl, hydroxy-$C_{1-4}$-alkoxy, $C_{1-4}$-alkoxy-$C_{1-4}$-alkoxy, $C_{1-4}$-alkoxy-$C_{1-4}$-alkoxycarbonyl, chloro and $C_{1-4}$-alkoxycarbonyloxy; and $R^4$ is selected from H and any of the alkyl and substituted alkyl groups defined for $R^5$.

3. A disperse monoazo dye according to Claim 1 wherein $R^1$, $R^2$ and $R^3$ each independently is $-CH_3$ or $-C_2H_5$;

$R^4$ is -H, $-C_2H_5$, $-C_2H_4CO_2CH_3$ or $-C_2H_4OCOCH_3$; and $R^5$ is $-C_2H_5$, $-C_2H_4CO_2CH_3$, $-C_2H_4OCOCH_3$ or $-C_2H_4CO_2C_2H_4OCH_3$.

**4.** Use of a disperse monoazo dye of Formula (1):

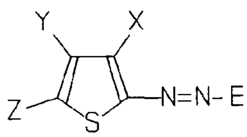

wherein
$R^1$, $R^2$ and $R^3$ each independently is lower alkyl;
$R^4$ is hydrogen or optionally substituted lower alkyl; and
$R^5$ represents optionally substituted lower alkyl for the coloration of synthetic textile materials.

European Patent Office

# EUROPEAN SEARCH REPORT

Application Number
EP 93 30 6361

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | WO-A-83 02452 (KODAK LTD.) * abstract; examples 6,7,10 * --- | 1-3 | C09B29/033 C09B29/08 D06P3/60 D06P3/26 D06P3/54 D06P3/82 |
| D,A | GB-A-1 394 365 (ICI) * page 3, column 1, line 25 - line 44; examples 59,87 * --- | 1-4 | |
| A | EP-A-0 297 710 (ICI) * page 3, line 47 - line 52; figure I; examples * --- | 1-4 | |
| A | EP-A-0 269 953 (BASF AG) * page 9, line 11 - line 14; table 5 * --- | 1-4 | |
| A | DE-A-23 33 828 (ICI) * claims * ----- | 1-4 | |

| TECHNICAL FIELDS SEARCHED (Int.Cl.5) |
|---|
| C09B |

The present search report has been drawn up for all claims

| Place of search | Date of completion of the search | Examiner |
|---|---|---|
| THE HAGUE | 1 December 1993 | Ketterer, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)